# FASCICULE DE BREVET EUROPEEN

(11) **EP 2 538 704 B1**
(45) Date de publication et mention de la délivrance du brevet: **02.08.2017**
(21) Numéro de dépôt: 12173289.5
(22) Date de dépôt: 22.06.2012
(51) Int. Cl.: H04W 4/12, H04W 4/18, H04W 88/16

(54) **Indexation d'un message court réalisée par le coeur du réseau**
Indexierung einer kurzen Nachricht von dem Kernnetz durchgeführt
Indexing a SMS from a core network

(30) Priorité: 24.06.2011 FR 1155650
(43) Date de publication de la demande: 26.12.2012
(73) Titulaire: Orange, 75015 Paris (FR)
(72) Inventeur: Boulic, Claude, 22300 LANNION (FR); Dooze, Philippe, 22700 LOUANNEC (FR)
(74) Mandataire: Delumeau, François Guy

(56) Documents cités:
- EP-A1- 1 871 048
- WO-A1-2006/034384
- WO-A1-2010/142357
- WO-A2-2011/019772
- US-A1- 2010 211 868
- "Universal Mobile Telecommunications System (UMTS); LTE; Support of Short Message Service (SMS) over generic 3GPP Internet Protocol (IP) access; Stage 2 (3GPP TS 23.204 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V10.2.0, 1 avril 2011 (2011-04-01), XP014064729,

## Description

### Arrière-plan de l'invention

L'invention se rapporte au domaine général des télécommunications.

Elle concerne plus particulièrement la gestion de messages courts, tels que des messages SMS (Short Message Service), dans un coeur de réseau « tout IP » s'appuyant, en particulier, sur une architecture IMS (IP Multimedia Subsystem) et mettant en oeuvre le protocole de signalisation SIP (Session Initiation Protocol).

L'invention a ainsi une application privilégiée dans le contexte des futurs réseaux mobiles LTE/EPC/IMS actuellement étudiés dans le cadre du standard 3GPP (Third Generation Partnership Project). Ces futurs réseaux mobiles sont entièrement basés sur la technologie IP (Internet Protocol) et sont composés du réseau d'accès LTE (Long-Term Evolution), du réseau coeur EPC (Evolved Packet Core) et de l'IMS pour l'établissement et le contrôle des services. Ce standard LTE/EPC/IMS, aussi appelé 4G, a pour but de promouvoir l'utilisation du haut-débit mobile tout en capitalisant sur les infrastructures existantes des réseaux de deuxième (ex. GSM, GPRS, EDGE) et de troisième génération (ex. UMTS, HSPA, etc.). Il apparaît comme une évolution des réseaux mobiles actuels vers des débits plus élevés et une meilleure couverture radio.

En attendant la migration totale des réseaux actuels des opérateurs de télécommunications vers des réseaux de quatrième génération, diverses entités fonctionnelles sont envisagées dans le standard IMS afin d'assurer l'interfonctionnement des réseaux à commutation de circuits (CS, Circuit Switched) ou de paquets (PS, Packet Switched), de deuxième ou de troisième génération, avec un réseau mobile tout IP LTE/EPC/IMS. Ces entités ont pour but notamment de permettre à des terminaux 2G/3G de communiquer et d'échanger des données avec des terminaux IP enregistrés auprès du coeur de réseau IMS.

Pour ce qui concerne l'échange de messages SMS, le standard IMS propose un schéma de messages SMS sur IP basé sur l'introduction d'une passerelle appelée IP-Short-Message-GateWay (IP-SM-GW) entre le serveur SMSC (Short Message Service Center) du réseau 2G/3G et le coeur de réseau IMS. Ce schéma est décrit dans le document 3GPP TS 23.204 « Support of Short Message Service over generic 3GPP Internet Protocol (IP) Access (Stage 2) », v11.0.0 (June 2011).

Plus précisément, dans ce schéma, lorsqu'un terminal 2G/3G émet un message SMS à destination d'un terminal IP enregistré auprès du réseau IMS, le message SMS reçu par le serveur SMSC est transféré vers la passerelle IP-SM-GW, encapsulé dans un message conforme au protocole de signalisation MAP (Mobile Application Protocol).

La passerelle IP-SM-GW désencapsule le message MAP, puis vérifie la disponibilité du terminal IP destinataire du message (et notamment son enregistrement auprès du coeur de réseau IMS). Le cas échéant, elle encapsule le message SMS dans un message SIP et le transmet au serveur d'appel S-CSCF du coeur de réseau IP.

Celui-ci transfère alors le message SMS encapsulé vers le terminal IP destinataire du message.

Conformément au standard, les messages SMS sont donc transmis directement au terminal destinataire des messages dès lors qu'il est disponible.

Pour accéder à ces messages SMS, il n'existe pas actuellement d'autres moyens que de consulter l'application de gestion des messages SMS présente sur le terminal.

Cette absence de moyens alternatifs rend difficile voire impossible aujourd'hui l'intégration des messages SMS dans les messageries dites convergentes, qui permettent à un utilisateur, via par exemple un portail Web ou SMTP (Simple Mail Transfer Protocol), de traiter des messages de différentes natures le concernant, tels que des messages électroniques (i.e. courriels) ou des messages vocaux.

Le document WO 2006/034 384 décrit un procédé et un système d'échange de messages multimédia entre différents utilisateurs de terminaux mobiles.

### Objet et résumé de l'invention

L'invention permet notamment de remédier à cet inconvénient en proposant un procédé d'indexation d'un message court relatif à un premier terminal apte à communiquer sur un réseau de télécommunications mobile et à un second terminal provisionné auprès d'un coeur de réseau, ce procédé étant mis en oeuvre par un serveur d'application déclenché par un serveur d'appel du coeur de réseau ou par une passerelle reliant le réseau de télécommunications mobile au coeur de réseau. Ce procédé d'indexation comporte :
- une étape de réception du message court encapsulé dans un message conforme à un protocole de signalisation ;
- une étape de désencapsulation du message court ;
- une étape d'indexation du message court dans une base de données associée au second terminal ; et
- une étape d'information, d'une application cliente prédéterminée pour le second terminal et externe au coeur de réseau, de l'indexation du message court dans la base de données.

Corrélativement, l'invention vise également un serveur d'application d'un coeur de réseau, déclenché par un serveur d'appel du coeur de réseau et comprenant :
- des moyens de réception, en provenance du serveur d'appel, d'un message court relatif à un terminal provisionné auprès du coeur de réseau, ce message court étant encapsulé dans un message conforme à un protocole de signalisation sur IP ;
- des moyens de désencapsulation du message court ;
- des moyens d'indexation du message court dans une base de données associée au terminal ; et
- des moyens d'information, d'une application cliente prédéterminée pour le terminal et externe au coeur de réseau, de l'indexation du message court dans la base de données.

L'invention vise alternativement une passerelle reliant un réseau de télécommunications mobile à un coeur de réseau comprenant :
- des moyens de réception d'un message court relatif à un premier terminal apte à communiquer sur le réseau de télécommunications mobile et à un second terminal provisionné auprès du coeur de réseau, ce message court étant encapsulé dans un message conforme à un protocole de signalisation utilisé pour des communications mobiles (ex. MAP) ou à un protocole de signalisation sur IP (ex. SIP) ;
- des moyens de désencapsulation du message court ;
- des moyens d'indexation du message court dans une base de données associée au second terminal ; et
- des moyens d'information, d'une application cliente prédéterminée pour le second terminal et externe au coeur de réseau, de l'indexation du message court dans la base de données.

Par message court relatif à un terminal, on entend ici un message alphanumérique court, tel qu'un message SMS, émis par le terminal ou destiné au terminal. De façon similaire, un message court relatif à un premier terminal et à un second terminal désigne, au sens de l'invention, un message alphanumérique court émis par le premier terminal à destination du second terminal ou émis par le second terminal à destination du premier terminal.

En outre, par indexation d'un message court, on entend au sens de l'invention le stockage de ce message dans une base de données en association avec diverses informations contextuelles relatives à ce message, comme par exemple un identifiant de l'émetteur et du destinataire, la date et l'heure d'envoi du message, etc. Le terme « base de données» désigne ici un ensemble ou une structure quelconque de données, tel que par exemple une liste ou une table. Bien entendu, d'autres informations permettant notamment de classer les messages courts selon différents critères pour une recherche facilitée dans la base de données peuvent également être ajoutées au sens de l'invention lors de l'indexation du message court.

Ainsi, l'invention propose une solution simple pour faciliter l'accès aux messages courts relatifs à un terminal provisionné auprès d'un coeur de réseau reposant sur une architecture de type IMS (second terminal au sens de l'invention). Par « terminal provisionné auprès d'un coeur de réseau », on entend ici que le terminal dispose d'un profil utilisateur enregistré dans la base HSS (Home Subscriber Server) du coeur de réseau, autrement dit qu'il a souscrit à au moins un service auprès de ce coeur de réseau.

La solution proposée par l'invention est basée notamment sur l'indexation des messages courts émis et/ou destinés au second terminal dans le réseau, soit au niveau d'un serveur d'application dédié déclenché dans le coeur de réseau, soit au niveau d'une passerelle reliant le réseau de télécommunications mobile du premier terminal au coeur de réseau et par laquelle transite le message court. Dans le standard LTE/EPC/IMS, cette passerelle est typiquement la passerelle IP-SM-GW reliant le réseau mobile 2G/3G du premier terminal au coeur de réseau IMS.

Cette solution offre ainsi une plus grande liberté dans la gestion des messages courts et facilite leur accès par des applications externes au coeur de réseau IMS et au second terminal.

On notera que la mise en oeuvre de l'invention ne nécessite pas à proprement parler que le second terminal soit enregistré auprès du coeur de réseau (c'est-à-dire connecté au coeur de réseau), mais seulement provisionné auprès de celui-ci afin notamment de pouvoir associer une base de données au message court à indexer et accéder aux préférences de l'utilisateur du second terminal. L'invention permet donc avantageusement d'indexer également des messages courts relatifs à un terminal non enregistré auprès du coeur de réseau. Elle offre ainsi la possibilité à un utilisateur d'accéder aux messages qui lui sont destinés y compris lorsque son terminal n'est pas connecté au coeur de réseau (par exemple parce qu'il est éteint).

Le serveur d'application ou la passerelle chargé(e) de l'indexation des messages courts est en relation avec une application dite cliente, externe au coeur de réseau (et préférentiellement au réseau de télécommunications mobile), et prédéterminée pour le second terminal. Cette application peut être par exemple une application Web telle qu'une application de messagerie convergente à laquelle a souscrit l'utilisateur du second terminal et à laquelle il peut accéder par l'intermédiaire d'un réseau informatique (ex. Internet) et d'un navigateur approprié.

Cette application cliente externe peut également être localisée sur le second terminal.

Conformément à l'invention, elle est avantageusement informée de l'indexation des messages courts du second terminal. L'information de l'application cliente sera préférentiellement déclenchée par chaque indexation d'un nouveau message court relatif au second terminal.

En variante, elle pourra être mise en oeuvre de façon périodique, ou sur requête de l'application cliente, etc.

Par le biais de cette application cliente externe, l'utilisateur du second terminal peut donc être aisément informé de l'existence des messages courts qui lui sont destinés (ex. en se connectant à l'application) sans avoir besoin de consulter son terminal.

On notera que l'invention permet également d'indexer des messages courts envoyés par le second terminal. Ainsi, grâce à l'invention, l'utilisateur du second terminal peut avoir un aperçu global des messages courts qu'il a envoyés et qui lui sont envoyés.

En outre, la solution proposée par l'invention est avantageusement déployée dans le réseau (i.e. dans le coeur de réseau ou à la frontière entre le réseau mobile et le coeur de réseau). Ceci permet d'éviter le développement d'applications propriétaires et spécifiques aux terminaux pour accéder aux messages courts (émis ou reçus) stockés dans ces terminaux.

Dans un mode de réalisation particulier de l'invention, le procédé d'indexation comprend en outre une étape d'envoi du message court à l'application cliente.

Cet envoi peut être mis en oeuvre notamment en utilisant le protocole HTTP (HyperText Transfer Protocol). En variante, d'autres protocoles de transport peuvent être envisagés comme par exemple le protocole SMTP (Simple Mail Transfer Protocol).

En outre, l'envoi du message court pourra être réalisé sur requête de l'application cliente ou en variante, à l'initiative du serveur d'application ou de la passerelle.

L'utilisateur peut ainsi accéder, par l'intermédiaire de l'application cliente externe, aux messages courts qui lui sont destinés et/ou aux messages courts qu'il a envoyés. Dans une certaine mesure, cela permet à l'utilisateur de continuer à pouvoir accéder à ses messages courts même lorsqu'il n'est plus enregistré auprès du coeur de réseau.

En outre, l'invention permet d'enrichir le contenu des applications de type messageries convergentes en leur permettant de gérer également les messages courts concernant un utilisateur, en plus des messages classiques comme les courriels, les messages vocaux...

On notera que lorsque le message court est un message destiné au second terminal, il peut également être envoyé au second terminal suite à l'étape d'indexation pour permettre à l'utilisateur d'accéder au message sur son terminal.

L'invention permet ainsi une gestion plus flexible des messages courts, en offrant la possibilité à l'utilisateur du second terminal de recevoir ses messages courts sur son terminal et/ou l'application externe. Le choix de l'une et/ou l'autre option pourra dépendre notamment de la politique mise en oeuvre par l'opérateur du coeur de réseau ou de préférences utilisateur préenregistrées dans le coeur de réseau.

Dans un mode de réalisation particulier de l'invention, le procédé d'indexation comporte en outre, lorsqu'il est mis en oeuvre par le serveur d'application, une étape d'envoi, suite à l'étape d'indexation, d'un message de notification au serveur d'appel l'informant d'un traitement du message court.

Ce message est notamment destiné à faire en sorte que le serveur d'appel considère le message court comme délivré au terminal destinataire.

Lorsque l'indexation est réalisée par un serveur d'application dédié du coeur de réseau, une autre entité coopère à la gestion des messages courts dans le coeur de réseau conformément à l'invention, à savoir le serveur d'appel qui déclenche le serveur d'application sur réception du message court.

Ainsi, l'invention vise également un procédé de traitement d'un message court relatif à un terminal provisionné auprès d'un coeur de réseau, ce procédé étant mis en oeuvre par un serveur d'appel du coeur de réseau sur réception d'un message encapsulant le message court conforme à un protocole de signalisation sur IP. Conformément à l'invention, ce procédé comprend une étape d'envoi du message encapsulant le message court à un serveur d'application dédié du coeur de réseau pour indexation du message court.

Corrélativement, l'invention vise également un serveur d'appel d'un coeur de réseau comportant des moyens d'envoi d'un message encapsulant un message court relatif à un terminal provisionné auprès du coeur de réseau et conforme à un protocole de signalisation sur IP, à un serveur d'application dédié du coeur de réseau pour indexation du message court, lesdits moyens d'envoi étant activés sur réception du message encapsulant le message court.

Dans un mode particulier de réalisation, le procédé de traitement selon l'invention comprend en outre une étape de réception d'un message de notification du serveur d'application dédié l'informant d'un traitement du message court par le serveur d'application.

Dans un autre mode de réalisation, le procédé de traitement selon l'invention comprend en outre une étape d'envoi du message encapsulant le message court au terminal, lorsque le message court est un message destiné au terminal.

Selon un autre aspect, l'invention vise également un système d'un coeur de réseau comprenant :
- un serveur d'appel selon l'invention, apte à recevoir un message conforme à un protocole de signalisation sur IP encapsulant un message court relatif à un terminal provisionné auprès du coeur de réseau ; et
- un serveur d'application selon l'invention déclenché par le serveur d'appel sur réception du message encapsulant le message court, pour indexation de ce message court.

Le serveur d'appel et le système selon l'invention possèdent les mêmes avantages que le serveur d'application, mentionnés précédemment.

Dans un mode particulier de réalisation, les différentes étapes du procédé d'indexation et les différentes étapes du procédé de traitement selon l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur d'application ou dans une passerelle reliée au coeur de réseau ou plus généralement dans un ordinateur, ce programme comportant des instructions adaptées à la mise en oeuvre des étapes d'un procédé d'indexation tel que décrit ci-dessus.

Par ailleurs, l'invention vise aussi un programme d'ordinateur sur un support d'informations, ce programme étant susceptible d'être mis en oeuvre dans un serveur d'appel ou plus généralement dans un ordinateur, ce programme comportant des instructions adaptées à la mise en oeuvre des étapes d'un procédé de traitement tel que décrit ci-dessus.

Ces programmes peuvent utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé d'indexation, le procédé de traitement, le serveur d'application, le serveur d'appel et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente, de façon schématique, un système d'un coeur de réseau IMS conforme à l'invention dans un premier mode de réalisation ;
- les figures 2 et 3 représentent respectivement, de façon schématique, l'architecture matérielle du serveur d'appel et du serveur d'application conformes à l'invention représentés sur la figure 1, dans une variante particulière de réalisation ;
- la figure 4A représente les principales étapes d'un procédé d'indexation et d'un procédé de traitement selon l'invention d'un message court destiné à un terminal UE, lorsqu'ils sont mis en oeuvre respectivement par le serveur d'application et par le serveur d'appel de la figure 1 dans une variante particulière de réalisation ;
- la figure 4B représente une variante de réalisation du procédé d'indexation et du procédé de traitement représentés sur la figure 4A ; et
- la figure 5 représente les principales étapes d'un procédé d'indexation et d'un procédé de traitement selon l'invention d'un message court émis par un terminal UE, lorsqu'ils sont mis en oeuvre respectivement par le serveur d'application et par le serveur d'appel de la figure 1 dans une variante particulière de réalisation ;
- la figure 6 représente, dans son environnement, une passerelle conforme à l'invention reliant un réseau de télécommunications mobile à un coeur de réseau IMS, dans un second mode de réalisation ;
- la figure 7 représente de façon schématique l'architecture matérielle de la passerelle conforme à l'invention représentée sur la figure 6, dans une variante particulière de réalisation ;
- la figure 8 représente les principales étapes d'un procédé d'indexation d'un message court destiné à un terminal UE, lorsqu'il est mis en oeuvre par la passerelle de la figure 6 dans une variante particulière de réalisation ;
- la figure 9 représente les principales étapes d'un procédé d'indexation d'un message court émis par un terminal UE, lorsqu'il est mis en oeuvre par la passerelle de la figure 6 dans une variante particulière de réalisation.

### Description détaillée de l'invention

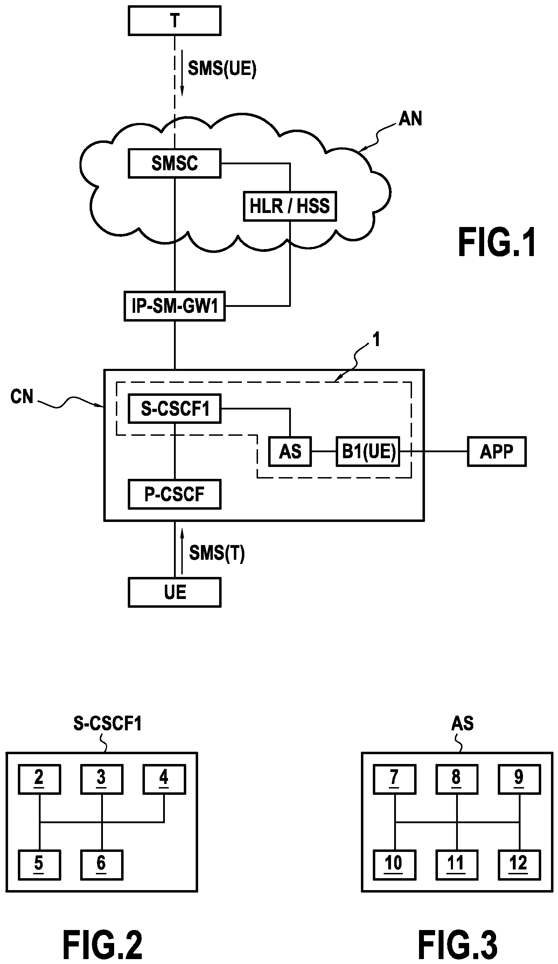

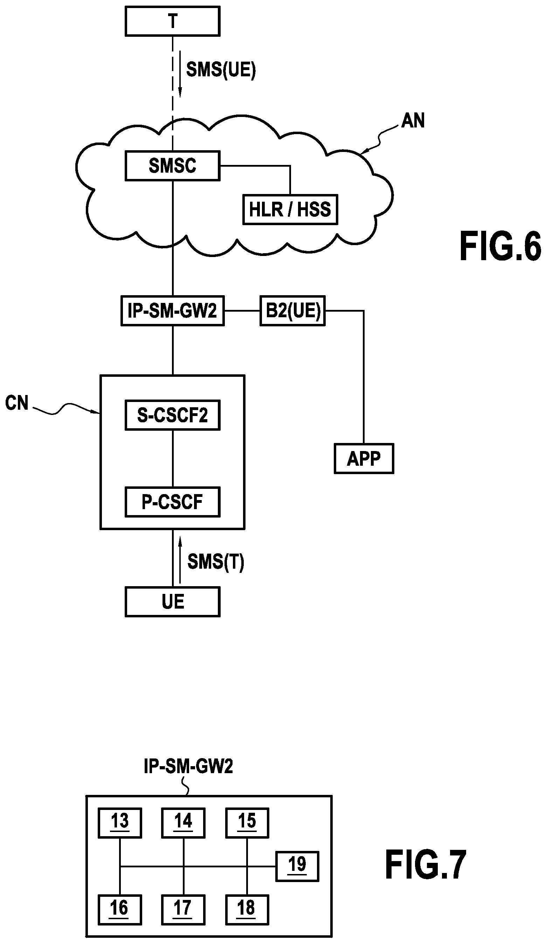

Dans la suite de la description, on envisage deux modes de réalisation de l'invention :
- dans le premier mode de réalisation, l'indexation des messages courts échangés entre un terminal provisionné auprès d'un coeur de réseau IMS et un terminal apte à communiquer sur un réseau de télécommunications mobile est réalisée par un serveur d'application du coeur de réseau IMS. Ce premier mode de réalisation est décrit en référence aux figures 1-5 ;
- dans le second mode de réalisation, l'indexation des messages courts est réalisée par une passerelle reliant le coeur de réseau IMS au réseau de télécommunications mobile. Ce second mode de réalisation est décrit en référence aux figures 6-9.

### Premier mode de réalisation (figures 1-5) :

La **figure 1** représente, dans son environnement, un système 1 d'un réseau CN de communications conforme à l'invention, dans un premier mode de réalisation.

Le réseau CN est un coeur de réseau IP (Internet Protocol) incorporant une architecture IMS et mettant en oeuvre, pour la signalisation échangée dans le réseau, le protocole d'initiation de session SIP (protocole de signalisation sur IP au sens de l'invention). Les caractéristiques de l'architecture IMS et le protocole SIP sont définis respectivement au niveau du standard 3GPP et de l'IETF, notamment dans les documents 3GPP TS 22.228 « Service requirements for the IP Multimedia Core Network Subsystem (Stage 1) » et IETF RFC 3261 « Session Initiation Protocol ». Ils ne seront de ce fait pas décrits en détail ici.

Dans l'exemple envisagé ici, pour décrire les caractéristiques et le fonctionnement du système 1, on considère le modèle générique d'architecture proposé dans le document 3GPP TS23.204.

Plus précisément, le coeur de réseau CN comprend plusieurs entités fonctionnelles, dont notamment une entité CSCF (Call Session Control Function) et un serveur HSS.

L'entité CSCF est elle-même composée de plusieurs serveurs, parmi lesquels un serveur S-CSCF1 (Serving Call Session Control Function) en charge notamment de l'enregistrement des terminaux auprès du coeur de réseau CN, et un serveur P-CSCF (Proxy Call Session Control Function), point de contact des terminaux avec le coeur de réseau CN.

Le coeur de réseau CN est par ailleurs connecté, pour le traitement des messages courts, à une passerelle IP-SM-GW1 elle-même connectée à un réseau de télécommunications mobile AN. Le réseau de télécommunications mobile AN est ici un réseau UMTS équipé notamment d'un dispositif SMSC (SMS Center) de traitement des messages courts (messages SMS) émis et/ou reçus par les terminaux enregistrés auprès du réseau AN, et d'un serveur HLR (Home Location Register), tous deux connus en soi.

En variante, l'invention s'applique à d'autres réseaux de télécommunications mobiles dotés d'un service de messages courts, comme par exemple à un réseau 2G (ex. GSM, EDGE, GPRS) ou 3G (ex. HSDPA) à commutation de circuits ou de paquets, ou à un réseau LTE.

La passerelle IP-SM-GW1 est une passerelle IP-SM-GW permettant l'interfonctionnement du réseau AN avec le coeur de réseau CN pour ce qui concerne la gestion des messages SMS. Elle est vue comme un dispositif MSC par les entités du réseau de télécommunications mobile AN, tandis qu'elle se comporte comme un serveur d'application pour les entités du coeur de réseau CN et notamment pour le serveur S-CSCF1. Ses principales fonctionnalités (ex. sélection des domaines IMS ou CS/PS, encapsulation des messages courts, etc.) sont décrites dans le document 3GPP TS23.204.

Elle possède notamment :
- des moyens connus lui permettant de désencapsuler et/ou d'encapsuler un message conformément à un protocole de signalisation utilisé pour des communications mobiles (et notamment dans cet exemple sur le réseau mobile AN), à savoir ici le protocole MAP ; et
- des moyens connus lui permettant de désencapsuler et/ou d'encapsuler un message conformément à un protocole de signalisation sur IP, à savoir ici le protocole SIP.

Ces moyens lui permettent notamment de traiter des messages courts SMS(UE) envoyés par un terminal T connecté au réseau AN à destination d'un terminal UE provisionné auprès du réseau CN et/ou inversement, des messages courts SMS(T) envoyés par un terminal UE provisionné auprès du réseau CN à destination d'un terminal T connecté au réseau AN.

Dans l'exemple envisagé ici, le terminal UE provisionné auprès du réseau CN est un terminal apte à communiquer sur un réseau LTE.

On notera que lorsque le réseau AN est également un réseau LTE, la passerelle IP-SM-GW1 dispose de moyens lui permettant de désencapsuler et/ou d'encapsuler un message conformément au protocole MAP, c'est-à-dire conformément à un protocole de signalisation utilisé pour des communications mobiles sur les réseaux 2G/3G, même si le réseau mobile LTE utilise un protocole de signalisation sur IP (SIP).

En effet, conformément au standard IMS, les messages courts envoyés en SIP par les terminaux des réseaux LTE sont au cours de leur traitement soit envoyés à la passerelle IP-SM-GW1 par le dispositif SMSC, soit envoyés par la passerelle IP-SM-GW1 au dispositif SMSC. Le dispositif SMSC étant un dispositif d'un réseau 2G/3G, il communique selon le protocole MAP.

Autrement dit, les moyens de la passerelle lui permettant d'encapsuler et/ou de désencapsuler des messages conformément au protocole MAP et au protocole SIP lui permettent de traiter des messages envoyés par et à des terminaux d'un réseau LTE.

Dans l'exemple envisagé ici, les terminaux T (premier terminal au sens de l'invention) et UE (second terminal au sens de l'invention) sont des téléphones mobiles, dotés de moyens connus en soi pour émettre et/ou recevoir des messages courts SMS sur leurs réseaux respectifs (i.e. réseau AN et réseau LTE). Bien entendu, d'autres terminaux peuvent être envisagés.

En outre, dans l'exemple envisagé ici, on se limite à indexer les messages courts envoyés par et reçus par le terminal UE. Toutefois, on pourrait également envisager d'indexer les messages courts envoyés par et reçus par le terminal T conformément à l'invention, notamment lorsque le réseau de télécommunications mobile est un réseau LTE et que le terminal T est provisionné auprès du coeur de réseau CN.

Le serveur S-CSCF1 du réseau CN est en outre un serveur d'appel conforme à l'invention. Il dispose ici de l'architecture matérielle d'un ordinateur, telle que représentée schématiquement sur la **figure 2****.** Le serveur S-CSCF1 comporte notamment un processeur 2, une mémoire vive 3, une mémoire morte 4, une mémoire non volatile 5, et des moyens de communication 6 sur le coeur de réseau IP mettant en oeuvre le protocole SIP.

La mémoire morte 4 du serveur S-CSCF1 constitue un support d'enregistrement conforme à l'invention, lisible par le processeur 2 et sur lequel est enregistré un programme d'ordinateur conforme à l'invention, comportant des instructions pour l'exécution des étapes d'un procédé de traitement selon l'invention décrites ultérieurement.

Conformément à l'invention, le serveur S-CSCF1 est apte à déclencher, sur réception d'un message court encapsulé dans un message SIP de la passerelle IP-SM-GW1 relatif au terminal UE, un serveur d'application AS pour l'indexation de ce message dans une base de données B1(UE) associée au terminal UE.

Par souci de simplification dans la suite de la description, on désignera le serveur d'application AS par serveur AS d'indexation.

Dans le mode de réalisation décrit ici, le serveur d'indexation AS est un serveur dédié à l'indexation des messages courts, autrement dit, la principale fonction de ce serveur est d'indexer les messages courts que lui envoie le serveur S-CSCF1.

Le serveur d'indexation AS est un serveur d'application conforme à l'invention. Il présente ici l'architecture matérielle d'un ordinateur, telle que représentée schématiquement sur la **figure 3****.** Il dispose notamment d'un processeur 7, d'une mémoire vive 8, d'une mémoire morte 9, d'une mémoire non volatile 10, de moyens de communication 11 sur le coeur de réseau IP (mettant en oeuvre le protocole SIP), et de moyens de communication 12 avec une ou plusieurs applications clientes APP externes au coeur de réseau CN.

Les moyens de communication 12 mettent en oeuvre ici une application, apte à accéder à la base de données B1(UE), et à communiquer via le protocole HTTP avec les applications clientes APP.

En variante, ils peuvent mettre en oeuvre d'autres applications pouvant accéder à la base de données B1(UE) et communiquant selon d'autres protocoles de transport en fonction de la nature des applications clientes externes avec lesquelles ils sont en relation, comme par exemple selon le protocole SMTP.

La mémoire morte 9 du serveur d'indexation AS constitue un support d'enregistrement conforme à l'invention, lisible par le processeur 7 et sur lequel est enregistré un programme d'ordinateur conforme à l'invention, comportant des instructions pour l'exécution des étapes d'un procédé d'indexation selon l'invention décrites maintenant.

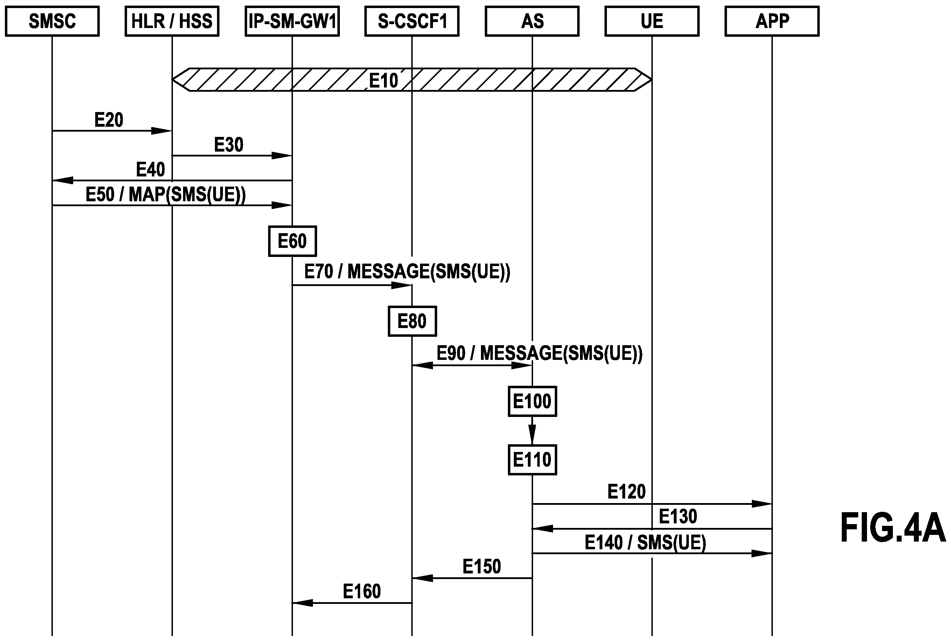

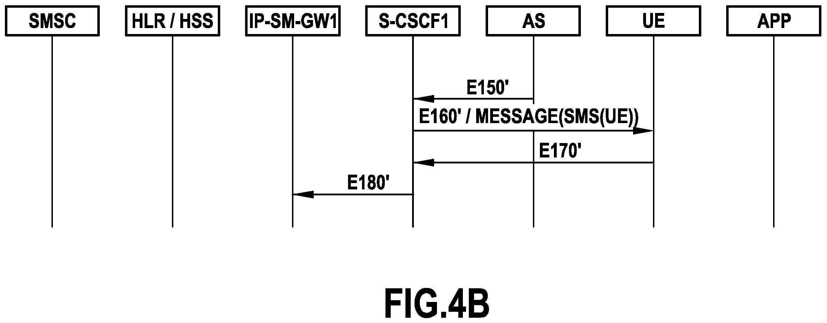

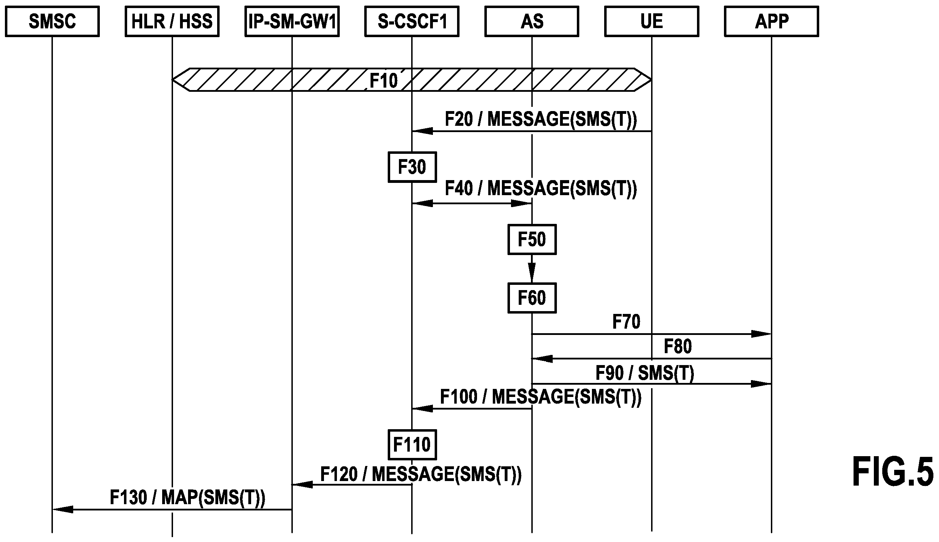

Nous allons maintenant décrire, en référence aux figures 4A, 4B et 5, les principales étapes d'un procédé de traitement et d'un procédé d'indexation d'un message court conformes à l'invention, dans ce premier mode particulier de réalisation dans lequel ils sont mis en oeuvre respectivement par le serveur S-CSCF1 et par le serveur d'application AS représentés sur la figure 1.

La **figure 4A** illustre le traitement mis en oeuvre par les serveurs S-CSCF1 et AS pour un message court émis par le terminal T connecté au réseau AN à destination du terminal UE provisionné auprès du coeur de réseau CN. Le traitement mis en oeuvre par les serveurs S-CSCF1 et AS pour un message court émis par le terminal UE à destination du terminal T sera décrit ultérieurement en référence à la figure 5.

Dans l'exemple envisagé ici, on suppose que lors d'une étape préliminaire (non représentée sur la figure 4A), le terminal UE a souscrit auprès de l'opérateur du coeur de réseau CN au service de messages SMS sur IP ainsi qu'à un service d'indexation de ces messages conformément à l'invention.

La souscription au service de messages SMS sur IP lui permet de sélectionner, comme domaine préféré pour la délivrance des messages SMS qui lui sont destinés, le domaine IMS. Cette préférence est mémorisée dans les données de souscription de l'utilisateur (ou profil utilisateur) au niveau du serveur HSS et sera appliquée ultérieurement par la passerelle IP-SM-GW1.

De façon connue, un profil utilisateur consiste en un ensemble de profils établis pour chaque service auquel l'utilisateur a souscrit auprès du coeur de réseau CN. Conformément au standard 3GPP, chaque profil de service contient un ensemble de critères de filtrage (iFC, initial Filter Criteria) qui reflètent la nécessité ou non de déclencher un serveur d'application pour ce service.

Ainsi, dans le mode de réalisation décrit ici, on suppose que les critères de filtrage contenus dans le profil de service associé au service d'indexation des SMS selon l'invention reflètent la nécessité de déclencher le serveur d'indexation AS sur réception d'un message court relatif au terminal UE (c'est-à-dire émis par le terminal ou destiné au terminal UE).

Dans une variante de réalisation on peut envisager que l'indexation du message SMS ne soit mise en oeuvre par le serveur AS que pour des messages destinés au terminal UE.

A l'issue de cette étape préliminaire, s'il ne l'était pas déjà auparavant, le terminal UE est maintenant provisionné auprès du coeur de réseau IMS, autrement dit un profil utilisateur associé au terminal UE et contenant les données de souscription de l'utilisateur du terminal UE ainsi que ses préférences, est maintenant créé au niveau du coeur de réseau IMS et stocké dans le serveur HSS.

Dans la variante de réalisation représentée sur la figure 4A, suite à cette étape préliminaire de souscription, le terminal UE s'enregistre auprès du coeur de réseau CN en envoyant notamment une requête SIP REGISTER au serveur S-CSCF1 (étape E10). La procédure d'enregistrement d'un terminal auprès d'un réseau IMS étant connue de l'homme du métier, elle ne sera pas détaillée davantage ici.

On suppose maintenant que le terminal T envoie un message court SMS(UE) au terminal UE via le réseau mobile AN. Ce message court est encapsulé dans un message MAP(SMS(UE)) conforme au protocole MAP et comporte un identifiant du terminal UE (ainsi que par ailleurs un identifiant du terminal T), tel que son numéro de téléphone. Il est reçu par le dispositif SMSC du réseau AN.

Sur réception du message MAP(SMS(UE)), le dispositif SMSC interroge le serveur HLR à l'aide de l'identifiant du terminal UE contenu dans le message (ou d'un identifiant du terminal UE dérivé de l'identifiant contenu dans le message), et ce afin d'obtenir des informations de routage du message court (étape E20).

Le serveur HLR transmet la requête du dispositif SMSC à la passerelle IP-SM-GW1 associée au terminal UE (étape E30). Lorsqu'une pluralité de passerelles IP-SM-GW est connectée au coeur de réseau CN, l'adresse de la passerelle IP-SM-GW1 associée au terminal UE est préférentiellement préconfigurée dans une base du serveur HLR.

Sur réception de cette requête, la passerelle IP-SM-GW1 envoie son adresse au dispositif SMSC (étape E40).

Le dispositif SMSC transmet alors le message court encapsulé dans le message MAP(SMS(UE)) à la passerelle IP-SM-GW1 en utilisant l'adresse reçue (étape E50), et de la même manière qu'il délivrerait un message court à un dispositif MSC ou à un serveur SGSN (Serving GPRS Support Node) du réseau AN.

La passerelle IP-SM-GW1 désencapsule le message MAP(SMS(UE)) ainsi reçu et sélectionne le domaine vers lequel envoyer le message court SMS(UE) en consultant le profil utilisateur associé au terminal UE mis à jour lors de la souscription du terminal UE au service de messages SMS sur IP (étape E60).

Dans l'exemple décrit ici, s'agissant du domaine IMS, la passerelle encapsule en outre le message SMS(UE) dans un message SIP MESSAGE, noté dans la suite de la description MESSAGE(SMS(UE)).

Puis, elle transmet le message court encapsulé au serveur S-CSCF1 (étape E70).

On notera que les étapes E10 à E70 sont conformes à la procédure décrite dans le document 3GPP TS 23.304. L'homme du métier est invité à se référer à ce document pour plus de détails sur ces étapes.

Sur réception du message court encapsulé MESSAGE(SMS(UE)), le serveur S-CSCF1 consulte, à l'aide de l'identifiant du terminal UE, le profil utilisateur associé au terminal UE et plus particulièrement le profil de service associé au service de SMS sur IP (étape E80). On notera que les données de souscription du terminal UE sont communiquées par le serveur HSS au serveur S-CSCF1 lors de l'étape d'enregistrement E10 du terminal UE auprès du coeur de réseau CN.

Le serveur S-CSCF1 analyse en particulier les critères de filtrage contenus dans ce profil et en déduit qu'il doit déclencher le serveur d'application AS d'indexation des messages courts. Ce déclenchement est réalisé par l'envoi du message court encapsulé MESSAGE(SMS(UE)) au serveur d'indexation AS (étape E90).

Sur réception du message court encapsulé MESSAGE(SMS(UE)), le serveur d'indexation désencapsule le message court (étape E100). L'encapsulation et la désencapsulation de messages étant connues en soi, elles ne seront pas détaillées ici.

Puis, il stocke le message court désencapsulé dans la base B1(UE) associée au terminal UE et identifiée à l'aide de l'identifiant du terminal contenu dans le message court (étape E110).

Plus précisément, au cours de cette étape dite d'indexation, le contenu du message court SMS(UE) est stocké dans la base B1(UE) en association avec diverses informations contextuelles relatives à ce message, comme par exemple l'émetteur, la date et l'heure d'envoi du message. La base B1(UE) contient ainsi une liste des messages SMS adressés au terminal UE. D'autres informations pourront être par ailleurs stockées dans la base B1(UE) en association avec le message court afin de faciliter une recherche ultérieure dans cette base, par exemple par mots clés.

Suite à l'étape d'indexation, le serveur AS informe au moins une application cliente APP prédéterminée pour le terminal UE et externe au coeur de réseau CN de l'indexation du message court dans la base B1(UE) (étape E120). Cette application cliente est par exemple ici une application de messagerie convergente auprès de laquelle l'utilisateur du terminal UE est enregistré, et qui est accessible via une page Web.

Dans le mode de réalisation décrit ici, la configuration de l'application cliente (protocole HTTP d'échange avec cette application, adresse de la page Web (URL), etc.) a été enregistrée préférentiellement par l'opérateur, lors de la souscription au service d'indexation par l'utilisateur du terminal UE.

Le serveur AS notifie donc l'application cliente APP de l'indexation du message SMS(UE) dans la base de données B1(UE) par le biais des moyens 12 (et plus précisément de l'application web mis en oeuvre par les moyens 12), en envoyant un message HTTP à l'application APP.

En variante, l'application cliente APP pourra effectuer une requête HTTP long polling (mécanisme de « long polling » connu en soi) vers l'application mise en oeuvre par les moyens 12. Dans ce cas, le serveur AS notifiera l'application cliente de l'indexation du message SMS(UE) dans la réponse à la requête HTTP long polling.

Bien entendu, plusieurs applications clientes de différentes natures peuvent être prédéterminées pour le terminal UE et informées le cas échéant de l'indexation de messages courts relatifs à ce terminal.

On notera qu'un message informant l'application cliente de l'indexation du message court dans la base de données peut, au sens de l'invention, prendre diverses formes. Il peut s'agir d'un message informant explicitement l'application cliente de la présence du message dans la base B1(UE) ou un message contenant une information implicite, comme par exemple, un nombre de messages nouvellement indexés dans la base, ou un message comportant le message court lui-même (ex. message HTTP encapsulant le message court).

Dans l'exemple envisagé ici, sur réception de cette notification, l'application cliente APP envoie une requête HTTP au serveur AS d'indexation afin de recevoir le message court indexé (étape E130).

Sur réception de cette requête, le serveur AS d'indexation transmet le message court SMS(UE) à l'application cliente APP, par l'intermédiaire de ses moyens de communication 12 (étape E140). De cette sorte, l'utilisateur du terminal UE peut être informé, via l'application cliente APP, du message court qui lui est destiné et accéder à ce message. Il ne lui est pas utile pour cela de consulter l'application de gestion des messages courts de son terminal UE.

Le serveur AS d'indexation notifie ensuite le serveur S-CSCF1 de l'achèvement du traitement du message SIP encapsulant le message court SMS(UE) (étape E150). Par l'intermédiaire de cette notification, le serveur AS indique au serveur S-CSCF1 qu'il (i.e. le serveur AS) est un point terminal du traitement du message SIP MESSAGE(SMS(UE)).

Le serveur S-CSCF1 déduit de cette notification que le message court SMS(UE) a été traité correctement et transmis à son destinataire : de ce fait, il ne transmet pas le message SIP encapsulant le message SMS(UE) au terminal UE, et informe la passerelle IP-SM-GW1 que le traitement du message SIP est correctement achevé (étape E160).

Ainsi dans ce mode de réalisation, le message court SMS(UE) n'est envoyé qu'à l'application cliente APP identifiée dans le profil de service du terminal UE.

Dans une variante de réalisation représentée à la **figure 4B****,** on envoie également au terminal UE le message SIP MESSAGE(SMS(UE)) dans lequel le message court SMS(UE) est encapsulé. Sur la figure 4B, seules les étapes E150' à E180' sont représentées, celles-ci venant en remplacement des étapes E150-E160 représentées à la figure 4A, toutes les autres étapes étant identiques par ailleurs.

Plus précisément, dans cette variante, suite à l'indexation du message court, le serveur d'indexation AS envoie au serveur S-CSCF1 un message de notification l'informant que l'indexation du message court est achevée (étape E150'), mais que le serveur d'indexation n'est pas le point terminal de traitement du message court.

Sur réception de ce message, le serveur S-CSCF1 transmet au terminal UE le message SIP MESSAGE(SMS(UE)) dans lequel le message court SMS(UE) est encapsulé (étape E160').

Le terminal UE accuse réception du message court auprès du serveur S-CSCF1 (étape E170'), qui en informe la passerelle IP-SM-GW1 (étape E180').

On notera que la configuration à adopter (i.e. envoi ou non du message au terminal) pourra indifféremment résulter d'un choix de l'utilisateur (ex. lors de sa souscription au service d'indexation) ou être définie par l'opérateur.

Nous allons maintenant décrire, en référence à la **figure 5****,** le traitement mis en oeuvre par les serveurs S-CSCF1 et AS pour un message court émis par le terminal UE provisionné auprès du coeur de réseau CN à destination d'un terminal T connecté au réseau AN.

L'étape préliminaire de souscription au service de messages SMS sur IP et l'étape d'enregistrement du terminal (étape F10) représentées sur la figure 5 sont identiques respectivement à l'étape de souscription et à l'étape d'enregistrement E10 du terminal décrites en référence à la figure 4A.

On suppose maintenant que le terminal UE envoie un message court SMS(T) au terminal T (étape F20), via le coeur de réseau CN.

Ce message court comporte un identifiant du terminal T ainsi qu'un identifiant du terminal UE, tels que leurs numéros de téléphone, et est encapsulé dans un message SIP MESSAGE. On note MESSAGE(SMS(T)) le message court ainsi encapsulé.

Le message SIP MESSAGE(SMS(T)) est reçu par le serveur S-CSCF1 qui consulte alors, à l'aide de l'identifiant du terminal UE, le profil utilisateur associé au terminal UE et plus particulièrement le profil de service associé au service d'indexation des messages courts (étape F30). Comme mentionné précédemment les données de souscription du terminal UE sont communiquées par le serveur HSS au serveur S-CSCF1 lors de l'étape d'enregistrement du terminal UE auprès du coeur de réseau CN.

Le serveur S-CSCF1 analyse les critères de filtrage contenus dans ce profil et en déduit qu'il doit déclencher le serveur d'application AS d'indexation des messages courts (étape F40) à réception d'un message court émis par le terminal UE. Comme décrit précédemment pour l'étape E90, ce déclenchement est réalisé par l'envoi du message court encapsulé MESSAGE(SMS(T)) au serveur AS d'indexation.

Sur réception du message court encapsulé, le serveur d'indexation désencapsule le message court SMS(T) (étape F50).

Puis, il stocke (indexe) le message court désencapsulé SMS(T) dans la base B1(UE) associée au terminal UE, et identifiée à l'aide de l'identifiant du terminal UE contenu dans le message court (étape F60).

Suite à cette indexation, le serveur AS envoie, par l'intermédiaire de ses moyens de communication 12, une notification de l'indexation du message court dans la base B1(UE) à l'application cliente APP prédéterminée pour le terminal UE et externe au coeur de réseau CN (étape F70).

Dans l'exemple envisagé ici, sur réception de cette notification, l'application cliente APP envoie une requête HTTP au serveur AS d'indexation afin de recevoir le message court indexé (étape F80).

Sur réception de cette requête, le serveur AS d'indexation transmet le message court SMS(T) à l'application cliente APP (étape F90). De cette sorte, l'utilisateur du terminal UE peut archiver, via l'application cliente APP, le message court qu'il a émis et accéder à ce message.

Les étapes F40-F90 étant similaires respectivement aux étapes E90-E140, elles ne seront pas décrites plus en détail ici.

Le serveur AS d'indexation renvoie ensuite le message SIP MESSAGE(SMS(T)) au serveur S-CSCF1 (étape F100).

Sur réception de ce message, le serveur S-CSCF1 consulte le profil utilisateur associé au terminal UE, et analyse les critères de filtrage contenus dans le profil de service associé au service de SMS sur IP (étape F110).

Suite à cette analyse, il transmet le message encapsulé à la passerelle IP-SM-GW1 (étape F120).

La passerelle IP-SM-GW1 désencapsule le message SIP MESSAGE (SMS(T)), puis encapsule le message court SMS(T) dans un message MAP(SMS(T)) conforme au protocole MAP. Elle transmet ensuite le message court encapsulé selon le protocole MAP au dispositif SMSC pour acheminement vers le terminal T conformément au mécanisme décrit dans le document 3GPP TS 23.204 (étape F130).

L'invention permet donc d'indexer à la fois les messages émis par et à destination d'un terminal provisionné auprès d'un réseau IMS.

Dans les descriptions faites en référence aux figures 4A et 4B, le terminal UE est enregistré auprès du coeur de réseau IMS. Toutefois, comme mentionné précédemment, l'invention ne requiert pas à proprement parler que le terminal UE soit enregistré auprès du coeur de réseau IMS. L'invention s'applique en effet également lorsque le terminal UE n'est pas connecté au coeur de réseau IMS (et donc n'est pas enregistré auprès de celui-ci), dès lors qu'il est provisionné auprès du coeur de réseau IMS.

On notera que la mise en oeuvre de l'invention dans un contexte LTE/EPC/IMS lorsque le terminal UE n'est pas enregistré auprès du coeur de réseau IMS, requiert de modifier le fonctionnement actuel de la passerelle IP-SM-GW1 tel qu'il est défini dans le document 3GPP TS23.204. En effet, conformément à ce document, la passerelle IP-SM-GW1 vérifie, avant de transférer un message court au serveur d'appel S-CSCF1, que le terminal destinataire du message est bien enregistré auprès du coeur de réseau IMS. Si le terminal destinataire n'est pas enregistré, le message court n'est pas transmis et est renvoyé par la passerelle IP-SM-GW1 vers le serveur SMSC accompagné d'un message d'erreur.

Pour mettre en oeuvre l'invention lorsque le terminal UE n'est pas enregistré auprès du coeur de réseau IMS, cette vérification devra être désactivée au niveau de la passerelle IP-SM-GW1.

En outre, préférentiellement dans cette variante de réalisation, le serveur d'indexation sera configuré pour notifier systématiquement le serveur S-CSCF1 qu'il a traité le message court, et ce afin d'éviter que le serveur S-CSCF1 ne tente de transmettre en vain le message court au terminal UE et n'envoie un message d'erreur à la passerelle IP-SM-GW1, le terminal UE n'étant pas enregistré auprès du coeur de réseau CN.

### Second mode de réalisation (figures 6-9) :

La **figure 6** représente, dans son environnement, une passerelle IP-SM-GW2 conforme à l'invention reliant le réseau de télécommunications mobile AN au coeur de réseau IMS CN. Le réseau AN est ici un réseau UMTS équipé notamment d'un dispositif SMSC de traitement des messages courts émis et/ou reçus par les terminaux enregistrés auprès du réseau AN, et d'un serveur HLR. Bien entendu d'autres réseaux de télécommunications mobiles (ex. réseaux mobiles 2G, 3G ou LTE) peuvent être envisagés comme mentionné précédemment lors de la description du premier mode de réalisation.

Par souci de simplification, les éléments de la figure 6 qui sont similaires aux éléments de la figure 1 sont notés de façon identique (ex. terminaux T et UE, SMSC, etc.) et ne seront pas décrits de nouveau en détail ici.

Le réseau CN est un coeur de réseau IP (Internet Protocol) incorporant une architecture IMS et mettant en oeuvre, pour la signalisation échangée dans le réseau, le protocole d'initiation de session SIP. Comme décrit précédemment, le coeur de réseau CN comprend plusieurs entités fonctionnelles, dont notamment un serveur HSS et une entité CSCF comprenant un serveur S-CSCF2 en charge de l'enregistrement des terminaux auprès du coeur de réseau CN, et un serveur P-CSCF, point de contact des terminaux avec le coeur de réseau CN.

La passerelle IP-SM-GW2 est une passerelle IP-SM-GW permettant l'interfonctionnement du réseau AN avec le coeur de réseau CN pour ce qui concerne la gestion des messages SMS. Ses principales fonctionnalités (ex. sélection des domaines IMS ou CS/PS, encapsulation des messages courts, etc.) sont décrites dans le document 3GPP TS23.204.

Dans le second mode de réalisation décrit ici, la passerelle IP-SM-GW2 est en outre conforme à l'invention et apte à indexer les messages courts relatifs à un terminal UE provisionné auprès du coeur de réseau IMS dans une base de données B2(UE) associée au terminal UE.

La passerelle IP-SM-GW2 dispose ici de l'architecture matérielle d'un ordinateur, telle que représentée schématiquement sur la **figure 7****.** Elle comporte notamment un processeur 13, une mémoire vive 14, une mémoire morte 15, une mémoire non volatile 16, ainsi que des moyens 17 connus lui permettant de désencapsuler et/ou d'encapsuler un message conformément à un protocole de signalisation utilisé pour des communications mobiles (et notamment dans cet exemple sur le réseau mobile AN, à savoir le protocole MAP), et des moyens 18 connus lui permettant de désencapsuler et/ou d'encapsuler un message conformément à un protocole de signalisation sur IP (à savoir ici le protocole SIP).

Ces moyens 17 et 18 lui permettent de traiter des messages courts SMS(UE) envoyés par un terminal T connecté au réseau AN à destination du terminal UE provisionné auprès du réseau CN et/ou inversement, des messages courts SMS(T) envoyés par le terminal UE à destination du terminal T. Autrement dit, ces moyens 17 et 18 lui permettent de communiquer avec des entités du réseau mobile AN et des entités du coeur de réseau CN respectivement.

La passerelle IP-SM-GW2 comporte en outre des moyens de communication 19 avec au moins une application cliente APP externe au coeur de réseau CN et préférentiellement au réseau de télécommunications mobile AN. Dans le second mode de réalisation décrit ici, ces moyens de communication 19 mettent en oeuvre une application, apte à accéder à la base de données B2(UE), et à communiquer via le protocole HTTP avec les applications clientes APP.

En variante, ils peuvent mettre en oeuvre des applications pouvant accéder à la base de données B2(UE) et communiquant selon d'autres protocoles de transport en fonction de la nature des applications clientes externes avec lesquelles ils sont en relation, comme par exemple selon le protocole SMTP.

La mémoire morte 15 de la passerelle IP-SM-GW2 constitue un support d'enregistrement conforme à l'invention, lisible par le processeur 13 et sur lequel est enregistré un programme d'ordinateur conforme à l'invention, comportant des instructions pour l'exécution des étapes d'un procédé d'indexation selon l'invention décrites ultérieurement.

Dans l'exemple envisagé ici, les terminaux T (premier terminal au sens de l'invention) et UE (second terminal au sens de l'invention) sont des téléphones mobiles, dotés de moyens connus en soi pour émettre et/ou recevoir des messages courts alphanumériques sur leurs réseaux respectifs. Bien entendu, d'autres terminaux peuvent être envisagés.

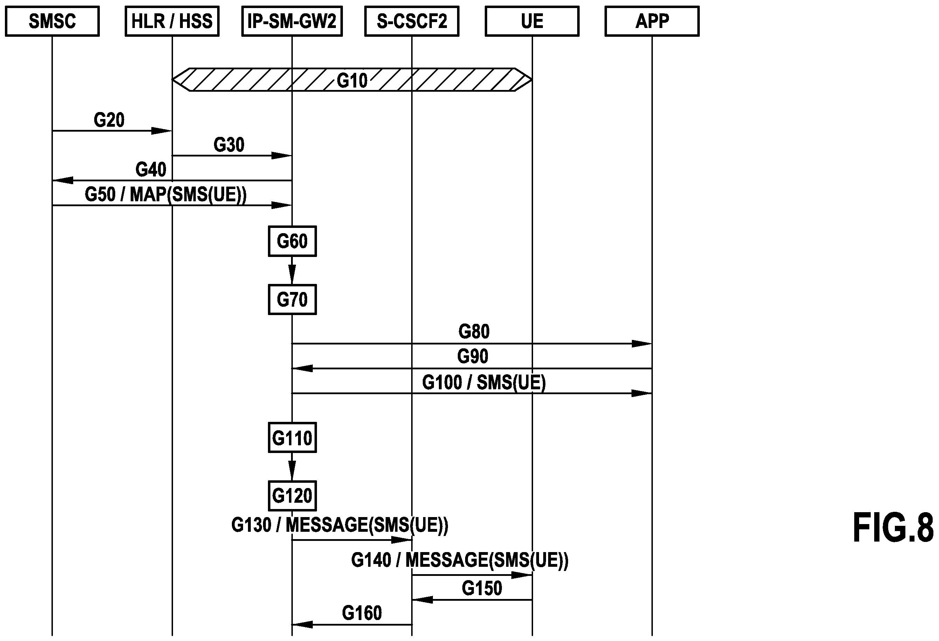

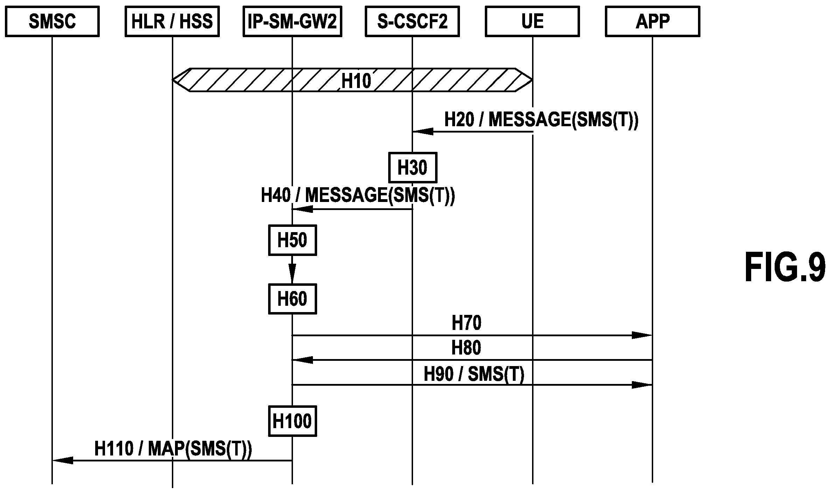

Nous allons maintenant décrire, en référence aux figures 8 et 9, les principales étapes d'un procédé d'indexation d'un message court conforme à l'invention dans ce second mode de réalisation dans lequel il est mis en oeuvre par la passerelle IP-SM-GW2 représentée sur la figure 6.

La **figure 8** illustre le traitement mis en oeuvre par la passerelle IP-SM-GW2 pour un message court émis par le terminal T connecté au réseau AN à destination du terminal UE provisionné auprès du coeur de réseau CN. Le traitement mis en oeuvre par la passerelle IP-SM-GW2 pour un message court émis par le terminal UE à destination du terminal T sera décrit ultérieurement en référence à la figure 9.

Comme décrit précédemment pour le premier mode de réalisation, on suppose ici que lors d'une étape préliminaire (non représentée sur la figure 8), le terminal UE a souscrit auprès de l'opérateur du coeur de réseau CN au service de messages SMS sur IP ainsi qu'à un service d'indexation de ces messages conformément à l'invention. La souscription au service de messages SMS sur IP lui permet notamment de sélectionner, comme domaine préféré pour la délivrance des messages SMS qui lui sont destinés, le domaine IMS.

A l'issue de cette étape préliminaire, s'il ne l'était pas déjà auparavant, le terminal UE est maintenant provisionné auprès du coeur de réseau IMS.

Dans la variante de réalisation représentée sur la figure 8, suite à cette étape préliminaire de souscription, le terminal UE s'enregistre auprès du coeur de réseau CN en envoyant notamment une requête SIP REGISTER au serveur S-CSCF2 (étape G10).

On suppose maintenant que le terminal T envoie un message court SMS(UE) au terminal UE via le réseau mobile AN. Ce message court est encapsulé dans un message MAP(SMS(UE)) conforme au protocole MAP et comporte un identifiant du terminal UE (ainsi que par ailleurs un identifiant du terminal T), tel que son numéro de téléphone. Il est reçu par le dispositif SMSC du réseau AN.

Sur réception du message MAP(SMS(UE)), le dispositif SMSC interroge le serveur HLR à l'aide de l'identifiant du terminal UE contenu dans le message (ou d'un identifiant du terminal UE dérivé de l'identifiant contenu dans le message), et ce afin d'obtenir des informations de routage du message court (étape G20).

Le serveur HLR transmet la requête du dispositif SMSC à la passerelle IP-SM-GW2 associée au terminal UE (étape G30).

Sur réception de cette requête, la passerelle IP-SM-GW2 envoie son adresse au dispositif SMSC (étape G40).

Le dispositif SMSC transmet alors le message court SMS(UE) encapsulé dans le message MAP(SMS(UE)) à la passerelle IP-SM-GW2 en utilisant l'adresse reçue (étape G50), et de la même manière qu'il délivrerait un message court à un dispositif MSC ou à un serveur SGSN du réseau AN.

On notera que les étapes G10-G50 étant similaires aux étapes E10-E50, elles ne seront de ce fait pas décrites plus en détail ici.

La passerelle IP-SM-GW2 désencapsule le message MAP(SMS(UE)) et sélectionne le domaine vers lequel envoyer le message court SMS(UE) en consultant le profil utilisateur associé au terminal UE mis à jour lors de la souscription du terminal UE au service de messages SMS sur IP (étape G60).

En outre, conformément à l'invention, elle stocke (indexe) le message court désencapsulé SMS(UE) dans la base B2(UE) associée au terminal UE, et identifiée à l'aide de l'identifiant du terminal contenu dans le message court (étape G70).

Plus précisément, au cours de cette étape d'indexation, le contenu du message court SMS(UE) est stocké dans la base B2(UE) en association avec diverses informations contextuelles relatives à ce message, comme par exemple l'émetteur, la date et l'heure d'envoi du message. La base B2(UE) contient ainsi une liste des messages SMS adressés au terminal UE. D'autres informations pourront être par ailleurs stockées dans la base B2(UE) en association avec le message court afin de faciliter une recherche ultérieure dans cette base, par exemple par mots clés.

Suite à cette étape d'indexation, la passerelle IP-SM-GW2 informe, par l'intermédiaire de ses moyens de communications 19, au moins une application cliente APP prédéterminée pour le terminal UE et externe au coeur de réseau CN de l'indexation du message court dans la base B2(UE) (étape G80).

Dans l'exemple envisagé ici, sur réception de cette notification, l'application cliente APP envoie une requête à la passerelle IP-SM-GW2 afin de recevoir le message court indexé (étape G90).

Sur réception de cette requête, la passerelle IP-SM-GW2 transmet le message court SMS(UE) à l'application cliente APP par l'intermédiaire de ses moyens de communication 19 (étape G100).

On notera qu'hormis le fait qu'elles sont mises en oeuvre par la passerelle IP-SM-GW2 et non par le serveur d'application AS, les étapes G70 à G100 sont similaires aux étapes E110-E140 décrites précédemment et ne seront pas détaillées davantage ici.

En fonction des préférences de l'utilisateur du terminal UE ou d'une politique définie par l'opérateur, la passerelle IP-SM-GW2 pourra également tenter de délivrer le message court SMS(UE) au terminal UE.

Le cas échéant, elle vérifie dans un premier temps auprès du serveur HSS si le terminal UE est enregistré auprès du coeur de réseau CN (étape G110), c'est-à-dire s'il est connecté au coeur de réseau CN.

Dans l'exemple envisagé ici, le terminal UE s'étant enregistré auprès du coeur de réseau CN au cours de l'étape G10, la passerelle IP-SM-GW2 encapsule, à l'aide de ses moyens 18, le message court SMS(UE) dans un message SIP MESSAGE, noté MESSAGE(SMS(UE)) (étape G120).

Puis elle envoie le message MESSAGE(SMS(UE)) au serveur S-CSCF2 (étape G130), qui transmet à son tour ce message au terminal UE (étape G140).

Le terminal UE accuse réception du message court auprès du serveur S-CSCF2 (étape G150), qui en informe la passerelle IP-SM-GW2 (étape G160).

Préférentiellement, si au cours de l'étape G110, la passerelle IP-SM-GW2 détecte que le terminal UE n'est pas enregistré auprès du coeur de réseau CN ou si au cours de l'étape G140 l'étape de transmission du SMS au terminal UE par le serveur S-CSCF2 échoue, la passerelle IP-SM-GW2 envoie quand même un message au dispositif SMSC l'informant que le message court SMS(UE) a bien été remis à son destinataire.

On évite ainsi de multiples tentatives de retransmission du message court SMS(UE) par le dispositif SMSC. L'indexation du message SMS(UE) dans la base B2(UE) permettra à l'utilisateur du terminal UE d'y accéder via l'application cliente APP notamment.

En variante, la passerelle IP-SM-GW2 notifie le dispositif SMSC de l'échec de la transmission du message au terminal UE' afin que celui-ci stocke le message SMS(UE) et tente de le délivrer ultérieurement.

Nous allons maintenant décrire, en référence à la **figure 9****,** le traitement mis en oeuvre par la passerelle IP-SM-GW2 pour un message court émis par le terminal UE à destination du terminal T.

L'étape préliminaire de souscription au service de messages SMS sur IP et l'étape d'enregistrement du terminal (étape H10) représentées sur la figure 9 sont identiques respectivement à l'étape de souscription et à l'étape d'enregistrement G10 du terminal décrites en référence à la figure 8.

On suppose maintenant que le terminal UE envoie un message court SMS(T) au terminal T (étape H20), via le coeur de réseau CN.

Ce message court comporte un identifiant du terminal T ainsi qu'un identifiant du terminal UE, tels que leurs numéros de téléphone, et est encapsulé dans un message SIP MESSAGE. On note MESSAGE(SMS(T)) le message court ainsi encapsulé.

Le message SIP MESSAGE(SMS(T)) est reçu par le serveur S-CSCF2, qui consulte le profil utilisateur associé au terminal UE et analyse les critères de filtrage contenus dans le profil de service associé au service de SMS sur IP (étape H30).

Suite à cette analyse, le serveur S-CSCF2 transmet le message encapsulé à la passerelle IP-SM-GW2 (étape H40).

La passerelle IP-SM-GW2 désencapsule le message SIP MESSAGE(SMS(T)) (étape H50).

Puis elle indexe le message décapsulé SMS(T) dans la base de données B2(UE) associée au terminal UE, et identifiée à l'aide de l'identifiant du terminal UE contenu dans le message court (étape H60).

Suite à cette indexation, la passerelle IP-SM-GW2 informe l'application cliente APP externe au coeur de réseau CN et au réseau mobile AN de l'indexation du message court dans la base B2(UE) (étape H70). Elle utilise à cette fin ses moyens de communication 19.

Dans l'exemple envisagé ici, sur réception de cette notification, l'application cliente APP envoie une requête HTTP à la passerelle IP-SM-GW2 afin de recevoir le message court indexé (étape H80).

Sur réception de cette requête, la passerelle IP-SM-GW2, par l'intermédiaire de ses moyens de communication 19, transmet le message court SMS(UE) à l'application cliente APP (étape H90).

Les étapes H40-H90 étant similaires respectivement aux étapes G40-G90, elles ne seront pas décrites plus en détail ici.

La passerelle IP-GW-SM2 encapsule ensuite le message court SMS(T) dans un message conforme au protocole MAP de signalisation sur le réseau mobile AN (étape H100). Le message encapsulé, noté MAP(SMS(T)) est ensuite envoyé au dispositif SMSC (étape H110), afin que celui-ci le délivre au terminal T.

Dans la description faite en référence à la figure 8, le terminal UE est enregistré auprès du coeur de réseau IMS. Toutefois, comme mentionné précédemment, l'invention s'applique également lorsque le terminal UE n'est pas connecté au coeur de réseau IMS et donc n'est pas enregistré auprès de celui-ci, dès lors qu'il est provisionné auprès du coeur de réseau IMS.

## Revendications

1. Procédé d'indexation d'un message court (SMS) relatif à un premier terminal (T) apte à communiquer sur un réseau de télécommunications mobile (AN) et à un second terminal (UE) provisionné auprès d'un coeur de réseau IMS (CN), ledit procédé étant mis en oeuvre par un serveur d'application (AS) déclenché par un serveur d'appel (S-CSCF1) du coeur de réseau ou par une passerelle (IP-SM-GW2) reliant ledit réseau de télécommunications mobile audit coeur de réseau, ledit procédé comportant :
- une étape (E90,F40,G50,H40) de réception du message court encapsulé dans un message conforme à un protocole de signalisation ;
- une étape (E100,F50,G60,H50) de désencapsulation du message court ;
- une étape (E110,F60,G70,H60) d'indexation du message court dans une base de données (B1(UE),B2(UE)) associée au second terminal ; et
- une étape (E120,F70,G80,H70) d'information d'une application cliente (APP) prédéterminée pour le second terminal et externe (APP) au coeur de réseau, de l'indexation du message court dans la base de données.

2. Procédé d'indexation selon la revendication 1 dans lequel:
- le message court est encapsulé dans un message conforme à un protocole de signalisation sur IP lorsque le procédé est mis en oeuvre par le serveur d'application ; et
- le message court est encapsulé dans un message conforme à un protocole de signalisation sur IP ou à un protocole de signalisation utilisé pour des communications mobiles lorsque le procédé est mis en oeuvre par la passerelle.

3. Procédé d'indexation selon la revendication 2 dans lequel :
- le protocole de signalisation sur IP est le protocole SIP ; et
- le protocole de signalisation utilisé pour des communications mobiles est le protocole MAP.

4. Procédé d'indexation selon la revendication 1 comportant en outre une étape (E140,F90,G100,H90) d'envoi du message court à l'application cliente (APP).

5. Procédé d'indexation selon la revendication 4 dans lequel l'envoi (E140, F90,G100,H90) du message court à l'application cliente (APP) est mis en oeuvre en utilisant le protocole HTTP.

6. Procédé d'indexation selon la revendication 1 comportant en outre, lorsque le procédé est mis en oeuvre par le serveur d'application (AS), une étape d'envoi (E150) suite à l'étape d'indexation, d'un message de notification au serveur d'appel l'informant d'un traitement du message court.

7. Programme d'ordinateur comportant des instructions pour l'exécution des étapes du procédé d'indexation d'un message court selon la revendication 1 lorsque ledit programme est exécuté par un ordinateur.

8. Support d'enregistrement lisible par un ordinateur sur lequel est enregistré un programme d'ordinateur comprenant des instructions pour l'exécution des étapes du procédé d'indexation d'un message court selon la revendication 1.

9. Serveur d'application (AS) d'un coeur de réseau IMS (CN), déclenché par un serveur d'appel (S-CSCF1) dudit coeur de réseau et comprenant :
- des moyens de réception (11), en provenance dudit serveur d'appel, d'un message court (SMS(UE),SMS(T)) relatif à un terminal (UE) provisionné auprès dudit coeur de réseau, ledit message court étant encapsulé dans un message (MESSAGE(SMS(UE)),MESSAGE(SMS(T))) conforme à un protocole de signalisation sur IP ;
- des moyens de désencapsulation du message court ;
- des moyens d'indexation (7) du message court dans une base de données (B1(UE)) associée au terminal ; et
- des moyens d'information (12) d'une application cliente (APP) prédéterminée pour ledit terminal et externe (APP) audit coeur de réseau, de l'indexation du message court dans la base de données (B1(UE)).

10. Passerelle (IP-SM-GW2) reliant un réseau de télécommunications mobile (AN) à un coeur de réseau IMS (CN) comprenant :
- des moyens de réception (17,18) d'un message court (SMS(UE),SMS(T)) relatif à un premier terminal (T) apte à communiquer sur ledit réseau de télécommunications mobile, et à un second terminal (UE) provisionné auprès dudit coeur de réseau, ledit message court étant encapsulé dans un message (MAP(SMS(UE)),MESSAGE(SMS(T))) conforme à un protocole de signalisation ;
- des moyens (17,18) de désencapsulation du message court ;
- des moyens d'indexation du message court dans une base de données (B2(UE)) associée au second terminal ; et
- des moyens d'information (19) d'une application cliente (APP) prédéterminée pour le second terminal et externe au coeur de réseau, de l'indexation du message court dans la base de données (B2(UE)).

11. Système (1) d'un coeur de réseau IMS (CN) comprenant :
- un serveur d'appel (S-CSCF1), apte à recevoir un message (MESSAGE(SMS(UE)),MESSAGE(SMS(T)) conforme à un protocole de signalisation sur IP encapsulant un message court (SMS(UE),SMS(T)) relatif à un terminal (UE) provisionné auprès du coeur de réseau ; et
- un serveur d'application (AS) selon la revendication 9 déclenché par le serveur d'appel (S-CSCF1) sur réception du message (MESSAGE(SMS(UE)),MESSAGE(SMS(T)) encapsulant le message court, pour indexation de ce message court (SMS(UE),SMS(T)).

12. Système (1) selon la revendication 11 dans lequel ledit serveur d'appel comprend des moyens, activés lorsque le message court (SMS(UE)) est destiné au terminal (UE), pour envoyer le message (MESSAGE(SMS(UE)) encapsulant ledit message court au terminal (UE).

## Patentansprüche

1. Verfahren zur Indexierung einer Kurznachricht (SMS) bezüglich eines ersten Endgeräts (T), das über ein mobiles Fernmeldenetz (AN) kommunizieren kann, und eines zweiten Endgeräts (UE), das innerhalb eines IMS-Kernnetzes (CN) bereitgestellt wird, wobei das Verfahren von einem Anwendungsserver (AS) durchgeführt wird, der von einem Anrufserver (S-CSCF1) des Kernnetzes oder von einem Gateway (IP-SM-GW2) ausgelöst wird, das das mobile Fernmeldenetz mit dem Kernnetz verbindet, wobei das Verfahren aufweist:
- einen Schritt (E90, F40, G50, H40) des Empfangs der Kurznachricht, die in einer Nachricht gemäß einem Signalisierungsprotokoll eingekapselt ist;
- einen Schritt (E100, F50, G60, H50) der Entkapselung der Kurznachricht;
- einen Schritt (E110, F60, G70, H60) der Indexierung der Kurznachricht in einer Datenbank (B1(UE), B2(UE)), die dem zweiten Endgerät zugeordnet ist; et
- einen Schritt (E120, F70, G80, H70) der Information einer vorbestimmten Client-Anwendung (APP) für das zweite Endgerät und außerhalb (APP) des Kernnetzes, über die Indexierung der Kurznachricht in der Datenbank.

2. Indexierungsverfahren nach Anspruch 1, wobei:
- die Kurznachricht in einer Nachricht gemäß einem IP-Signalisierungsprotokoll eingekapselt wird, wenn das Verfahren vom Anwendungsserver durchgeführt wird; und
- die Kurznachricht in einer Nachricht gemäß einem IP-Signalisierungsprotokoll oder einem für mobile Kommunikationen verwendeten Signalisierungsprotokoll eingekapselt wird, wenn das Verfahren vom Gateway durchgeführt wird.

3. Indexierungsverfahren nach Anspruch 2, wobei:
- das IP-Signalisierungsprotokoll das SIP-Protokoll ist; und
- das für mobile Kommunikationen verwendete Signalisierungsprotokoll das MAP-Protokoll ist.

4. Indexierungsverfahren nach Anspruch 1, das außerdem einen Schritt (E40, F90, G100, H90) des Sendens der Kurznachricht an die Client-Anwendung (APP) aufweist.

5. Indexierungsverfahren nach Anspruch 4, wobei das Senden (E140, F90, G100, H90) der Kurznachricht an die Client-Anwendung (APP) unter Verwendung des HTTP-Protokolls durchgeführt wird.

6. Indexierungsverfahren nach Anspruch 1, das außerdem, wenn das Verfahren durch den Anwendungsserver (AS) durchgeführt wird, einen Sendeschritt (E150) nach dem Indexierungsschritt einer Benachrichtigung an den Anrufserver aufweist, die ihn über eine Verarbeitung der Kurznachricht informiert.

7. Computerprogramm, das Anweisungen zur Ausführung der Schritte des Indexierungsverfahrens einer Kurznachricht nach Anspruch 1 aufweist, wenn das Programm von einem Computer ausgeführt wird.

8. Computerlesbarer Aufzeichnungsträger, auf dem ein Computerprogramm aufgezeichnet ist, das Anweisungen zur Ausführung der Schritte des Indexierungsverfahrens einer Kurznachricht nach Anspruch 1 enthält.

9. Anwendungsserver (AS) eines IMS-Kernnetzes (CN), der von einem Anrufserver (S-CSCF1) des Kernnetzes ausgelöst wird und enthält:
- Einrichtungen zum Empfang (11), vom Anrufserver, einer Kurznachricht (SMS(UE), SMS(T)) bezüglich eines Endgeräts (UE), das im Kernnetz bereitgestellt wird, wobei die Kurznachricht in einer Nachricht (MESSAGE(SMS(UE)), MESSAGE(SMS(T))) gemäß einem IP-Signalisierungsprotokoll eingekapselt ist;
- Einrichtungen zur Entkapselung der Kurznachricht;
- Einrichtungen zur Indexierung (7) der Kurznachricht in einer dem Endgerät zugeordneten Datenbank (B1(UE)); und
- Einrichtungen zur Information (12) einer vorbestimmten Client-Anwendung (APP) für das Endgerät und außerhalb (APP) des Kernnetzes, über die Indexierung der Kurznachricht in der Datenbank (B1 (UE)).

10. Gateway (IP-SM-GW2), das ein mobiles Fernmeldenetz (AN) mit einem IMS-Kernnetz (CN) verbindet, das enthält:
- Einrichtungen zum Empfang (17, 18) einer Kurznachricht (SMS (UE), SMS(T)) bezüglich eines ersten Endgeräts (T), das über das mobile Fernmeldenetz kommunizieren kann, und eines zweiten Endgeräts (UE), das im Kernnetz bereitgestellt wird, wobei die Kurznachricht in einer Nachricht (MAP(SMS(UE)), MESSAGE(SMS(T))) gemäß einem Signalisierungsprotokoll eingekapselt ist;
- Einrichtungen (17, 18) zur Entkapselung der Kurznachricht;
- Einrichtungen zur Indexierung der Kurznachricht in einer dem zweiten Endgerät zugeordneten Datenbank (B2(UE)); und
- Einrichtungen zur Information (19) einer vorbestimmten Client-Anwendung (APP) für das zweite Endgerät und außerhalb des Kernnetzes über die Indexierung der Kurznachricht in der Datenbank (B2 (UE)).

11. System (1) eines IMS-Kernnetzes (CN), das enthält:
- einen Anrufserver (S-CSCF1), der eine Nachricht (MESSAGE(SMS(UE)), MESSAGE(SMS(T)) gemäß einem IP-Signalisierungsprotokoll empfangen kann, die eine Kurznachricht (SMS(UE), SMS (T)) bezüglich eines Endgeräts (UE) einkapselt, das im Kernnetz bereitgestellt wird; und
- einen Anwendungsserver (AS) nach Anspruch 9, der vom Anrufserver (SCSCF1) bei Empfang der Nachricht (MESSAGE(SMS(UE)), MESSAGE(SMS(T)) ausgelöst wird, die die Kurznachricht einkapselt, zur Indexierung dieser Kurznachricht (SMS (UE), SMS (T)).

12. System (1) nach Anspruch 11, wobei der Anrufserver Einrichtungen enthält, die aktiviert werden, wenn die Kurznachricht (SMS (UE)) für das Endgerät (UE) bestimmt ist, um die die Kurznachricht einkapselnde Nachricht (MESSAGE(SMS(UE)) an das Endgerät (UE) zu senden.

## Claims

1. Method for indexing a short message (SMS) relating to a first terminal (T) able to communicate on a mobile telecommunications network (AN) and to a second terminal (UE) provisioned via an IMS core network (CN), said method being implemented by an application server (AS) triggered by a call server (S-CSCF1) of the core network or by a gateway (IP-SM-GW2) linking said mobile telecommunications network to said core network, said method comprising:
- a step (E90,F40,G50,H40) of receiving the short message encapsulated in a message in accordance with a signalling protocol;
- a step (E100,F50,G60,H50) of de-encapsulating the short message;
- a step (E110,F60,G70,H60) of indexing the short message in a database (B1(UE),B2(UE)) associated with the second terminal; and
- a step (E120,F70,G80,H70) of informing a client application (APP) predetermined in respect of the second terminal and external (APP) to the core network, of the indexing of the short message in the database.

2. Indexing method according to Claim 1 in which:
- the short message is encapsulated in a message in accordance with an over-IP signalling protocol when the method is implemented by the application server; and
- the short message is encapsulated in a message in accordance with an over-IP signalling protocol or with a signalling protocol used for mobile communications when the method is implemented by the gateway.

3. Indexing method according to Claim 2 in which:
- the over-IP signalling protocol is the SIP protocol; and
- the signalling protocol used for mobile communications is the MAP protocol.

4. Indexing method according to Claim 1 furthermore comprising a step (E140,F90,G100,H90) of dispatching the short message to the client application (APP).

5. Indexing method according to Claim 4 in which the dispatching (E140, F90,G100,H90) of the short message to the client application (APP) is implemented using the HTTP protocol.

6. Indexing method according to Claim 1 furthermore comprising, when the method is implemented by the application server (AS), a step of dispatching (E150) subsequent to the indexing step, a notification message to the call server informing it of a processing of the short message.

7. Computer program comprising instructions for the execution of the steps of the method for indexing a short message according to Claim 1 when said program is executed by a computer.

8. Recording medium readable by a computer on which is recorded a computer program comprising instructions for the execution of the steps of the method for indexing a short message according to Claim 1.

9. Application server (AS) of a core network (CN), triggered by a call server (S-CSCF1) of said core network and comprising:
- means (11) for receiving, originating from said call server, a short message (SMS(UE),SMS(T)) relating to a terminal (UE) provisioned via said core network, said short message being encapsulated in a message (MESSAGE(SMS(UE)),MESSAGE(SMS(T))) in accordance with an over-IP signalling protocol;
- means for de-encapsulating the short message;
- means (7) for indexing the short message in a database (B1 (UE)) associated with the terminal; and
- means (12) for informing a client application (APP) predetermined in respect of said terminal and external (APP) to said core network, of the indexing of the short message in the database (B1 (UE)).

10. Gateway (IP-SM-GW2) linking a mobile telecommunications network (AN) to an IMS core network (CN) comprising:
- means (17,18) for receiving a short message (SMS(UE),SMS(T)) relating to a first terminal (T) able to communicate on said mobile telecommunications network and to a second terminal (UE) provisioned via said core network, said short message being encapsulated in a message (MAP(SMS(UE)),MESSAGE(SMS(T))) in accordance with a signalling protocol;
- means (17,18) for de-encapsulating the short message;
- means for indexing the short message in a database (B2(UE)) associated with the second terminal; and
- means (19) for informing a client application (APP) predetermined in respect of the second terminal and external to the core network, of the indexing of the short message in the database (B2 (UE)).

11. System (1) of an IMS core network (CN) comprising:
- a call server (S-CSCF1), able to receive a message (MESSAGE(SMS(UE)),MESSAGE(SMS(T)) in accordance with an over-IP signalling protocol encapsulating a short message (SMS (UE),SMS (T)) relating to a terminal (UE) provisioned via the core network; and
- an application server (AS) according to Claim 9 triggered by the call server (S-CSCF1) on receipt of the message (MESSAGE(SMS(UE)),MESSAGE(SMS(T)) encapsulating the short message, for indexing this short message (SMS(UE),SMS(T)).

12. System (1) according to Claim 11 in which said call server comprises means, activated when the short message (SMS(UE)) is intended for the terminal (UE), for dispatching the message (MESSAGE(SMS(UE)) encapsulating said short message to the terminal (UE).
